# EUROPEAN PATENT APPLICATION

(11) **EP 4 852 031 A1**
(43) Date of publication of application: **09.12.2026**
(21) Application number: 25781778.3
(22) Date of filing: 03.04.2025
(51) Int. Cl.: H01B 13/02, H01B 9/00, H01B 11/22, H01B 7/14, G02B 6/44

(54) **SUBMARINE CABLE MANUFACTURING METHOD AND SUBMARINE CABLE**

(30) Priority: 03.04.2024 CN 202410407979
(71) Applicant: Zhongtian Technology Submarine Cable Co., Ltd., Nantong, Jiangsu 226000 (CN); South Sea Submarine Cable Co., Ltd., Shanwei, Guangdong 516545 (CN)
(72) Inventor: YAN, Yan, Nantong, Jiangsu 226000 (CN); HU, Ming, Nantong, Jiangsu 226000 (CN); ZHANG, Hongliang, Nantong, Jiangsu 226000 (CN); QIAO, Jing, Nantong, Jiangsu 226000 (CN)
(74) Representative: Boult Wade Tennant LLP
(86) International application number: PCT/CN2025/087210
(87) International publication number: WO 2025/209577

(57) **Abstract**

The present application belongs to the field of submarine cable technologies, and provides a submarine cable manufacturing method and a submarine cable. The submarine cable manufacturing method includes: performing a primary stranding by using a frame stranding machine, to strand a central wire, a first conductor layer and an optical fiber conducting layer of a submarine cable; performing a secondary stranding by using the frame stranding machine, to strand a second conductor layer of the submarine cable, where the primary stranding and the secondary stranding are performed using a rigid stranding machine of the same specification. The submarine cable manufacturing method provided by the present application can use a frame stranding machine of an existing specification to manufacture a submarine cable with a larger cross-sectional area, so that the cost for increasing the cross-sectional area of the submarine cable is relatively low.

## Description

The present application claims priority to Chinese Patent Application No. 202410407979.8 filed with China National Intellectual Property Administration on April 3, 2024 and entitled "Submarine Cable Manufacturing Method and Submarine Cable", which is hereby incorporated by reference in its entirety.

### TECHNICAL FIELD

The present application relates to the field of submarine cable technologies and, in particular, to a submarine cable manufacturing method and a submarine cable.

### BACKGROUND

With the rapid development of offshore wind power technology, the requirements of offshore wind power equipment on the transmission current-carrying capacity of submarine cables are gradually increasing.

As the current-carrying capacity of the submarine cable increases, the cross-sectional area of the submarine cable also increases. The submarine cable is produced by a frame stranding machine, and the maximum cross-sectional area of a cable that can be manufactured by a specific frame stranding machine is a fixed value. If a submarine cable with a larger cross-sectional area needs to be produced, the frame stranding machine needs to be upgraded and modified. For example, most submarine cable manufacturers use a 127-bobbin frame stranding machine to produce submarine cables, and the maximum cross-sectional area of a submarine cable that can be manufactured by the 127-bobbin frame stranding machine is 3,000 mm², and the 127-bobbin frame stranding machine may be upgraded into a 169-bobbin frame stranding machine, and the maximum cross-sectional area of a submarine cable that can be manufactured by the 169-bobbin frame stranding machine is 5,000 mm². However, the cost of upgrading and modifying the 127-bobbin frame stranding machine into the 169-bobbin frame stranding machine is relatively high. Therefore, the cost of increasing the cross-sectional area of the submarine cable by upgrading and modifying the frame stranding machine is relatively high.

In the related art, the cost of increasing the cross section of the submarine cable is relatively high.

### SUMMARY

The present application provides a submarine cable manufacturing method and a submarine cable, which can manufacture a submarine cable with a relatively large cross-sectional area by using a frame stranding machine of an existing specification, so that the cost of increasing the cross-sectional area of the submarine cable is relatively low.

The present application provides a submarine cable manufacturing method, including:
performing a primary stranding by using a frame stranding machine, to strand a central wire, a first conductor layer and an optical fiber conducting layer of a submarine cable;
performing a secondary stranding by using the frame stranding machine, to strand a second conductor layer of the submarine cable, where the primary stranding and the secondary stranding are performed using a rigid stranding machine of the same specification.

In a possible implementation, according to the submarine cable manufacturing method provided by the present application, the performing the secondary stranding by using the frame stranding machine to strand the second conductor layer of the submarine cable includes: when the second conductor layer is a single layer, a cross-sectional area of a second conductor wire in the second conductor layer is: a cross-sectional area of the second conductor layer / a number of bobbins in an outermost layer of the frame stranding machine.

In a possible implementation, according to the submarine cable manufacturing method provided by the present application, the performing the secondary stranding by using the frame stranding machine to strand the second conductor layer of the submarine cable includes: when the second conductor layer consists of two layers, a cross-sectional area of a second conductor wire in the second conductor layer is: a cross-sectional area of the second conductor layer / (a number of bobbins in an outermost layer of the frame stranding machine + a number of bobbins in a penultimate layer of the frame stranding machine).

In a possible implementation, according to the submarine cable manufacturing method provided by the present application, the performing the secondary stranding by using the frame stranding machine to strand the second conductor layer of the submarine cable includes: when the second conductor layer consists of three layers, a cross-sectional area of a second conductor wire in the second conductor layer is: a cross-sectional area of the second conductor layer / (a number of bobbins in an outermost layer of the frame stranding machine + a number of bobbins in a penultimate layer of the frame stranding machine + a number of bobbins in an antepenult layer of the frame stranding machine).

In a possible implementation, according to the submarine cable manufacturing method provided by the present application, after the performing the primary stranding by using the frame stranding machine to strand the central wire, the first conductor layer and the optical fiber conducting layer of the submarine cable, the method includes:
wrapping two layers of first water-blocking binding tapes around the optical fiber conducting layer; and heating the central wire, the first conductor layer and the optical fiber conducting layer.

In a possible implementation, according to the submarine cable manufacturing method provided by the present application, before the performing the secondary stranding by using the frame stranding machine to strand the second conductor layer of the submarine cable, the method includes: stripping off an outer layer of the first water-blocking binding tapes.

The present application further provides a submarine cable, including a central wire, a first conductor layer, an optical fiber conducting layer, a first water-blocking binding tape, a second conductor layer, a second water-blocking binding tape and a protective layer sequentially arranged from inside to outside along a radial direction of the submarine cable, where the first conductor layer has a plurality of layers, each layer of the first conductor layer includes a plurality of first conductor wires sequentially arranged along a circumferential direction of the submarine cable, the second conductor layer has at least one layer, and each layer of the second conductor layer includes a plurality of second conductor wires sequentially arranged along the circumferential direction of the submarine cable.

In a possible implementation, according to the submarine cable provided by the present application, the first conductor wire is trapezoidal, a first short side of the first conductor wire faces toward the central wire, a first long side of the first conductor wire faces away from the central wire, and first inclined sides of adjacent first conductor wires abut against each other; a distance between the first long side and the first short side is smaller than a distance between the two first inclined sides.

In a possible implementation, according to the submarine cable provided by the present application, the second conductor wire is trapezoidal, a second short side of the second conductor wire faces toward the central wire, a second long side of the second conductor wire faces away from the central wire, and second inclined sides of adjacent second conductor wires abut against each other; a distance between the second long side and the second short side is smaller than a distance between the two second inclined sides.

In a possible implementation, according to the submarine cable provided by the present application, the first conductor wire is in a annular-sector shape, the first conductor wire includes a first inner arc and a first outer arc, the first inner arc faces toward the central wire, and the first outer arc faces away from the central wire; two first side edges of the first conductor wire are provided with first tooth portions, and the first tooth portions on the first side edges of two adjacent first conductor wires mesh with each other.

In a possible implementation, according to the submarine cable provided by the present application, the second conductor wire is in a annular-sector shape, the second conductor wire includes a second inner arc and a second outer arc, the second inner arc faces toward the central wire, and the second outer arc faces away from the central wire; second side edges of the second conductor wire are provided with second tooth portions, and the second tooth portions on the second side edges of two adjacent second conductor wires mesh with each other.

In a possible implementation, according to the submarine cable provided by the present application, the optical fiber conducting layer includes a plurality of filling segments and a plurality of optical fibers, and the plurality of optical fibers and the plurality of filling segments are arranged at intervals along the circumferential direction of the submarine cable; the filling segments include first filling segments and second filling segments, each optical fiber is flanked by the first filling segments, and a side of each first filling segment facing toward the optical fiber fits closely with an outer wall of the optical fiber; the plurality of second filling segments are sequentially arranged along the circumferential direction on a side of the first filling segment facing away from the optical fiber, the side of the first filling segment facing away from the optical fiber is provided with a third tooth portion, and both sides of each second filling segment are provided with fourth tooth portions; the third tooth portion meshes with the fourth tooth portion adjacent to the third tooth portion, and adjacent fourth tooth portions mesh with each other.

In a possible implementation, according to the submarine cable provided by the present application, the first water-blocking binding tape is wrapped in a butt wrapping manner; and the second water-blocking binding tape is wrapped in a lap wrapping manner.

In the submarine cable manufacturing method and the submarine cable provided by the present application, the submarine cable manufacturing method includes the following two steps: performing a primary stranding by using a frame stranding machine, to strand a central wire, a first conductor layer and an optical fiber conducting layer of the submarine cable; performing a secondary stranding by using the frame stranding machine, to strand a second conductor layer of the submarine cable, where the primary stranding and the secondary stranding are performed using a rigid stranding machine of the same specification. During production of the submarine cable, the submarine cable is stranded in two stages by using the frame stranding machine of the same specification, and a relatively large number of bobbins in the frame stranding machine may be used for stranding during the secondary stranding. Therefore, the cross-sectional area of the submarine cable can be increased without modifying the frame stranding machine, so that the cost of increasing the cross-sectional area of the submarine cable is relatively low.

### BRIEF DESCRIPTION OF DRAWINGS

To describe the technical solutions in the embodiments of the present application or the prior art more clearly, the following briefly introduces the accompanying drawings required for describing the embodiments or the prior art. Apparently, the accompanying drawings in the following description show some embodiments of the present application, and those of ordinary skill in the art may still derive other drawings from these accompanying drawings without creative efforts.
FIG. 1 is a first flowchart of a submarine cable manufacturing method according to an embodiment of the present application.
FIG. 2 is a schematic structural diagram of a submarine cable manufactured by using a submarine cable manufacturing method according to an embodiment of the present application.
FIG. 3 is a schematic diagram of a primary stranding process in a submarine cable manufacturing method according to an embodiment of the present application.
FIG. 4 is a schematic diagram of a primary stranding process in a submarine cable manufacturing method according to an embodiment of the present application.
FIG. 5 is a second flowchart of a submarine cable manufacturing method according to an embodiment of the present application.
FIG. 6 is a third flowchart of a submarine cable manufacturing method according to an embodiment of the present application.
FIG. 7 is a first schematic structural diagram of a submarine cable according to an embodiment of the present application.
FIG. 8 is a first schematic structural diagram of a first conductor wire in a submarine cable according to an embodiment of the present application.
FIG. 9 is a first schematic structural diagram of a second conductor wire in a submarine cable according to an embodiment of the present application.
FIG. 10 is a second schematic structural diagram of a submarine cable according to an embodiment of the present application.
FIG. 11 is a second schematic structural diagram of a first conductor wire in a submarine cable according to an embodiment of the present application.
FIG. 12 is a second schematic structural diagram of a second conductor wire in a submarine cable according to an embodiment of the present application.
FIG. 13 is a third schematic structural diagram of a submarine cable according to an embodiment of the present application.
FIG. 14 is a fourth schematic structural diagram of a submarine cable according to an embodiment of the present application.
FIG. 15 is a schematic structural diagram of an optical fiber filling layer in a submarine cable according to an embodiment of the present application.
FIG. 16 is a schematic structural diagram of a first filling segment in a submarine cable according to an embodiment of the present application.
FIG. 17 is a schematic structural diagram of a second filling segment in a submarine cable according to an embodiment of the present application.

Explanation of reference signs:
100-submarine cable; 100a-semi-finished submarine cable; 110-central wire;
120-first conductor layer; 121-first conductor wire; 1211-first short side; 1212-first long side; 1213-first inclined side; 1214-first inner arc; 1215-first outer arc; 1216-first side edge; 1216a-first tooth portion;
130-optical fiber conducting layer; 131-optical fiber; 132-filling segment; 1321-first filling segment; 1321a-third tooth portion; 1322-second filling segment; 1322a-fourth tooth portion;
140-second conductor layer; 141-second conductor wire; 1411-second short side; 1412-second long side; 1413-second inclined side; 1414-second inner arc; 1415-second outer arc; 1416-second side edge; 1416a-second tooth portion;
150-first water-blocking binding tape; 160-second water-blocking binding tape;
170-protective layer;
171-PE filling layer;
172-PP inner cushion layer;
173-armored steel wire layer;
200-frame stranding machine;
300-first pay-off device; 400-first traction device; 500-second pay-off device; 600-second traction device; 700-first binding tape wrapping device; 800-tape stripping machine; 900-second binding tape wrapping device;
C1-first layer; C2-second layer; C3-third layer; C4-fourth layer; C5-fifth layer; C6-sixth layer; C7-seventh layer;
C-circumferential direction; R-radial direction.

### DESCRIPTION OF EMBODIMENTS

To make the objectives, technical solutions and advantages of the embodiments of the present application clearer, the technical solutions in the embodiments of the present application will be clearly and completely described below with reference to the accompanying drawings in the embodiments of the present application. Apparently, the described embodiments are some but not all of the embodiments of the present application. Based on the embodiments of the present application, all other embodiments obtained by those of ordinary skill in the art without creative efforts shall fall within the protection scope of the present application.

In the description of the present application, it should be noted that, unless otherwise explicitly specified and defined, the terms "mounted", "connected" and "connection" shall be interpreted broadly, for example, which may be a fixed connection, or may be an indirect connection through an intermediate medium, and may be internal communication between two elements or an interaction relationship between two elements. For those of ordinary skill in the art, the specific meanings of the above terms in the present application can be understood according to specific situations.

In the description of the present application, it should be understood that orientations or positional relationships indicated by terms "upper", "lower", "front", "rear", "vertical", "horizontal", "top", "bottom", "inner", "outer", etc. are orientations or positional relationships based on the accompanying drawings, which are only for convenience of describing the present application and simplifying the description, rather than indicating or implying that the referred device or element must have a specific orientation, be constructed and operated in a specific orientation, and thus cannot be construed as limiting the present application.

The terms "first", "second", "third" (if any) in the description, claims and the above accompanying drawings of the present application are used to distinguish similar objects, and are not necessarily used to describe a specific order or sequence. It should be understood that the data used in this way may be interchanged under appropriate circumstances, so that the embodiments of the present application described herein can be implemented in an order other than those illustrated or described herein.

In addition, terms "include", "have" and any variations thereof are intended to cover non-exclusive inclusion. For example, a process, method, system, product or maintenance tool including a series of steps or units is not necessarily limited to those steps or units clearly listed, but may include other steps or units not clearly listed or inherent to such process, method, product or maintenance tool.

Offshore wind power technology develops rapidly as clean energy. With the rapid development of offshore wind power technology, the transmission capacity of offshore wind power equipment has also been greatly improved. The submarine cable is used to transmit electric energy generated by the offshore wind power equipment. With the improvement of the transmission capacity of the offshore wind power equipment, requirements on the transmission current-carrying capacity of the submarine cable are gradually increasing.

As the current-carrying capacity of the submarine cable increases, the cross-sectional area of the submarine cable also increases. The submarine cable is produced by a frame stranding machine, and the maximum cross-sectional area of a cable that can be manufactured by a specific frame stranding machine is a fixed value. If a submarine cable with a larger cross-sectional area needs to be produced, the frame stranding machine needs to be upgraded and modified. For example, most submarine cable manufacturers use a 127-bobbin frame stranding machine to produce submarine cables. The maximum cross-sectional area of a submarine cable that can be manufactured by the 127-bobbin frame stranding machine is 3,000 mm². The 127-bobbin frame stranding machine can be modified into a 169-bobbin frame stranding machine, and the maximum cross-sectional area of a submarine cable that can be manufactured by the 169-bobbin frame stranding machine is 5,000 mm².

However, when upgrading and modifying the 127-bobbin frame stranding machine into the 169-bobbin frame stranding machine, large-scale equipment modification is required, and the equipment also needs to be shut down for cooperation, which affects production capacity and increases production costs. Therefore, increasing the cross-sectional area of the submarine cable by upgrading and modifying the frame stranding machine has a high cost.

In the related art, the cost of increasing the cross section of the submarine cable is relatively high.

Based on this, the present application provides a submarine cable manufacturing method and a submarine cable, which can manufacture a submarine cable with a relatively large cross-sectional area by using a frame stranding machine of an existing specification, so that the cost of increasing the cross-sectional area of the submarine cable is relatively low.

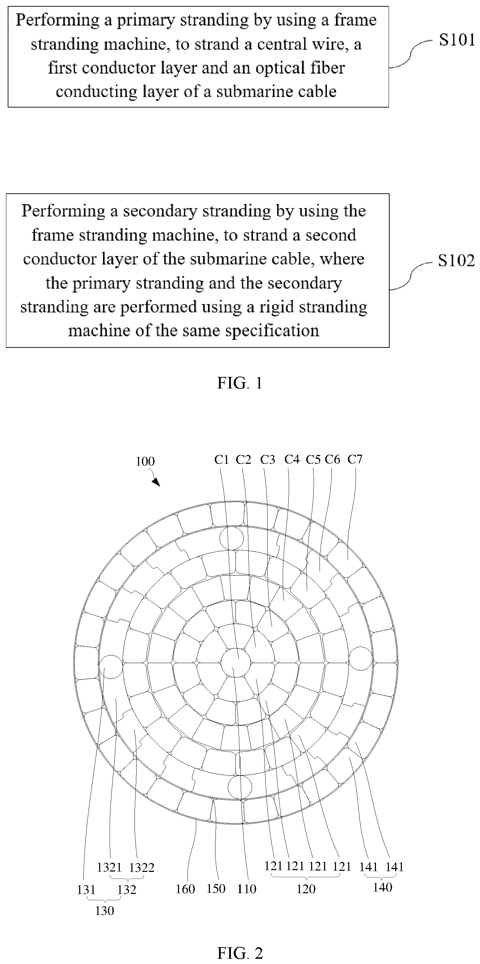

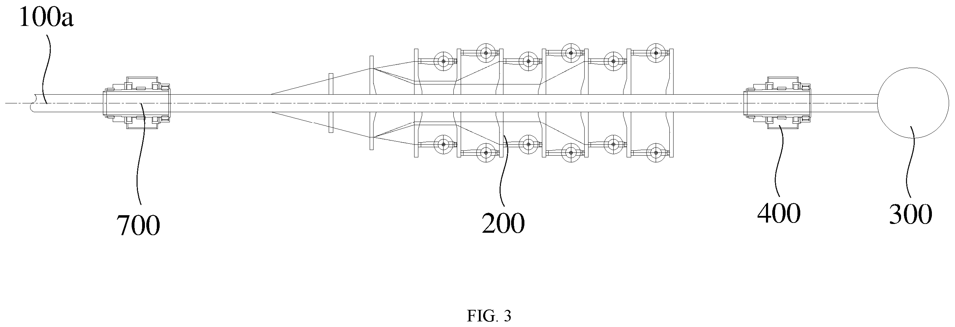

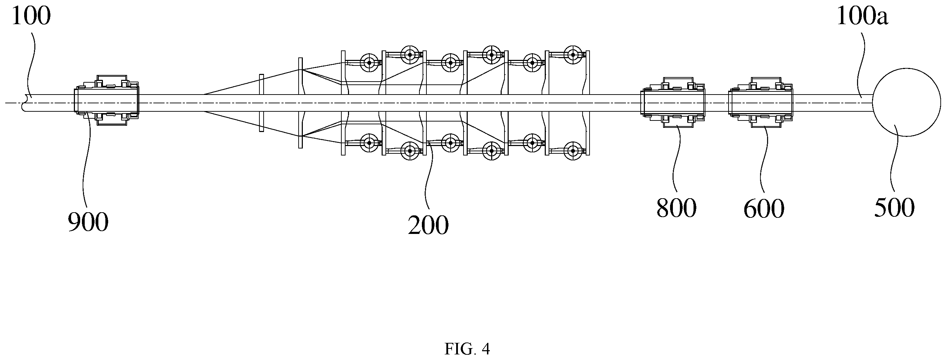

FIG. 1 is a first flowchart of a submarine cable manufacturing method according to an embodiment of the present application; FIG. 2 is a schematic structural diagram of a submarine cable manufactured by using a submarine cable manufacturing method according to an embodiment of the present application; FIG. 3 is a schematic diagram of a primary stranding process in a submarine cable manufacturing method according to an embodiment of the present application; FIG. 4 is a schematic diagram of a primary stranding process in a submarine cable manufacturing method according to an embodiment of the present application.

Referring to FIG. 1 to FIG. 4, the submarine cable manufacturing method provided by the present application includes: performing a primary stranding by using a frame stranding machine 200, to strand a central wire 110, a first conductor layer 120 and an optical fiber conducting layer 130 of a submarine cable 100; performing a secondary stranding by using the frame stranding machine 200, to strand a second conductor layer 140 of the submarine cable 100, where the primary stranding and the secondary stranding are performed using a rigid stranding machine of the same specification, namely, the frame stranding machine 200.

First, the structure of the submarine cable 100 is briefly described. Continuing to refer to FIG. 2, the submarine cable 100 includes a central wire 110, a first conductor layer 120, an optical fiber conducting layer 130 and a second conductor layer 140 sequentially arranged from inside to outside. The first conductor layer 120 may have a plurality of layers, each layer of the first conductor layer 120 includes a plurality of first conductor wires 121, the second conductor layer 140 may also have a plurality of layers, and each layer of the second conductor layer 140 includes a plurality of second conductor wires 141. In FIG. 1, four first conductor layers 120 and one second conductor layer 140 are shown. The optical fiber conducting layer 130 includes a plurality of optical fibers 131, a plurality of first filling segments 1321 and a plurality of second filling segments 1322. A first water-blocking binding tape 150 is further disposed between the optical fiber conducting layer 130 and the second conductor layer 140, and a second water-blocking binding tape 160 is further disposed outside the second conductor layer 140.

Then, taking a 127-bobbin frame stranding machine as an example, the structure of the frame stranding machine 200 is described. The value "127" in the 127-bobbin frame stranding machine refers to the number of conductor wires that may be stranded in the frame stranding machine 200. The number of bobbins of the frame stranding machine 200 represents the number of conductor wires that may be stranded in each layer of the frame stranding machine 200, and the sum of the numbers of bobbins of the frame stranding machine 200 is the total number of conductor wires that may be stranded by the frame stranding machine 200.

Table 1 lists the number of bobbins of the frame stranding machine 200 and the number of conductor wires in each layer of the submarine cable 100 corresponding to the number of bobbins of the frame stranding machine 200. Referring to Table 1 and FIG. 2, the central wire 110 forms a first layer C1, four first conductor layers 120 form a second layer C2, a third layer C3, a fourth layer C4 and a fifth layer C5 respectively, the optical fiber conducting layer 130 forms a sixth layer C6, and the second conductor layer 140 forms a seventh layer C7. The first layer C1 includes 1 central wire 110, the second layer C2 includes 6 first conductor wires 121, the third layer C3 includes 12 first conductor wires 121, the fourth layer C4 includes 18 first conductor wires 121, the fifth layer C5 includes 24 first conductor wires 121, the total number of optical fibers 131, first filling segments 1321 and second filling segments 1322 in the sixth layer C6 is 30, and the seventh layer C7 includes 36 second conductor wires 141. The sum of all conductor wires in respective layers is 127, and the number of conductor wires that can be stranded by the 127-bobbin frame stranding machine is 127.

**Table 1: Number of bobbins of a frame stranding machine and number of conductor wires in each layer of a submarine cable corresponding to the number of bobbins.**

| Submarine cable layer | Number of conductor wires in each layer of submarine cable | Number of bobbins of frame stranding machine |
|---|---|---|
| C1 | 1 | 1 |
| C2 | 6 | 6 |
| C3 | 12 | 12 |
| C4 | 18 | 18 |
| C5 | 24 | 24 |
| C6 | 30 | 30 |
| C7 | 36 | 36 |

Continuing to refer to FIG. 1 and FIG. 3, the submarine cable manufacturing method includes:
S101: performing a primary stranding by using a frame stranding machine 200, to strand a central wire 110, a first conductor layer 120 and an optical fiber conducting layer 130 of a submarine cable 100.

During the primary stranding, the central wire 110, a plurality of first conductor layers 120 and the optical fiber conducting layer 130 of the submarine cable 100 are stranded by the frame stranding machine 200. For the central wire 110, the first bobbin of the frame stranding machine 200 is used; for the first conductor layers 120, the 6th to 24th bobbins of the frame stranding machine 200 are used; and for the optical fiber conducting layer 130, the 30th bobbin of the frame stranding machine 200 is used. After the primary stranding is completed, the central wire 110, the plurality of first conductor layers 120 and the optical fiber conducting layer 130 form a semi-finished submarine cable 100a. It should be noted that during the primary stranding, stranding directions of two adjacent first conductor layers 120 are opposite.

Continuing to refer to FIG. 3, during the primary stranding, a first pay-off device 300 and a first traction device 400 are further disposed at a front end of the frame stranding machine 200, so that the central wire 110, the plurality of first conductor layers 120 and the optical fiber conducting layer 130 maintain appropriate tension during the stranding process, where the first traction device 400 may be a belt traction device.

S102: performing a secondary stranding by using the frame stranding machine 200, to strand a second conductor layer 140 of the submarine cable 100, where the primary stranding and the secondary stranding are performed using a rigid stranding machine of the same specification, namely, the frame stranding machine 200.

The semi-finished submarine cable 100a is fed again into the frame stranding machine 200 of the same specification, and the second conductor layer 140 is stranded with the semi-finished submarine cable 100a. For the second conductor layer 140, the 36th bobbin of the frame stranding machine 200 is used. It should be noted that during the secondary stranding, a stranding direction of the second conductor layer 140 is opposite to a stranding direction of the optical fiber conducting layer 130.

Continuing to refer to FIG. 4, during the secondary stranding, a second pay-off device 500 and a second traction device 600 are further disposed at the front end of the frame stranding machine 200, so that the second conductor layer 140 maintains appropriate tension during the stranding process, where the second traction device 600 may be a belt traction device.

Both the primary stranding and the secondary stranding use a 127-bobbin frame stranding machine. That is, during production of the submarine cable 100, the submarine cable 100 is stranded in two stages by using the frame stranding machine 200 of the same specification, and a relatively large number of bobbins in the frame stranding machine 200 may be used for stranding during the secondary stranding. Therefore, the cross-sectional area of the submarine cable 100 can be increased without modifying the frame stranding machine 200, so that the cost of increasing the cross-sectional area of the submarine cable 100 is relatively low. For example, a submarine cable with a cross-sectional area greater than 3,000 mm² can be produced by using the 127-bobbin frame stranding machine, and a submarine cable with a cross-sectional area greater than 5,000 mm² can be produced by using a 169-bobbin frame stranding machine.

According to the submarine cable manufacturing method provided by the embodiment of the present application, two steps are provided: S101: performing the primary stranding by using the frame stranding machine 200, to strand the central wire 110, the first conductor layer 120 and the optical fiber conducting layer 130 of the submarine cable 100; S102: performing the secondary stranding by using the frame stranding machine 200, to strand the second conductor layer 140 of the submarine cable 100, where the primary stranding and the secondary stranding are performed using a rigid stranding machine of the same specification, namely, the frame stranding machine 200. During production of the submarine cable 100, the submarine cable 100 is stranded in two stages by using the frame stranding machine 200 of the same specification, and a relatively large number of bobbins in the frame stranding machine 200 may be used for stranding during the secondary stranding. Therefore, the cross-sectional area of the submarine cable 100 can be increased without modifying the frame stranding machine 200, so that the cost of increasing the cross-sectional area of the submarine cable 100 is relatively low.

During the secondary stranding, the cross-sectional area of each conductor wire to be stranded in the secondary stranding needs to be calculated in advance. Since the maximum number of bobbins of the frame stranding machine 200 may have been used during the primary stranding, during the secondary stranding, in order to make the second conductor wires 141 in the second conductor layer 140 abut against each other tightly, the cross-sectional area of the second conductor wire 141 needs to be larger than the cross-sectional area of the first conductor wire 121. Therefore, the cross-sectional area of the second conductor wire 141 needs to be calculated. The cross-sectional area of the second conductor wire 141 may be calculated according to the cross-section of the semi-finished submarine cable 100a and the number of bobbins of the frame stranding machine.

In a first implementation, when the second conductor layer 140 is a single layer, the cross-sectional area of the second conductor wire 141 in the second conductor layer 140 is: a cross-sectional area of the second conductor layer 140 / a number of bobbins in an outermost layer of the frame stranding machine 200.

Specifically, in the submarine cable 100 shown in FIG. 2, the second conductor layer 140 is a single layer, and the second conductor layer 140 may be stranded by using the number of bobbins in the outermost layer of the frame stranding machine 200. For example, in the 127-bobbin frame stranding machine, the number of bobbins in the outermost layer is 36.

First, the cross-sectional area of the second conductor layer 140 is calculated. After the primary stranding is completed, the cross-sectional area of the submarine cable 100 is denoted as S1; after the secondary stranding, the preset cross-sectional area of the submarine cable 100 is denoted as S2; the cross-sectional area of the second conductor layer 140 to be stranded is denoted as S3. Therefore, the cross-sectional area S3 of the second conductor layer 140 is a difference between S2 and S1. After the cross-sectional area S3 of the second conductor layer 140 is calculated, the cross-sectional area of the second conductor wire 141 in the second conductor layer 140 can be calculated by dividing the cross-sectional area S3 of the second conductor layer 140 by the number of bobbins of the frame stranding machine 200. The cross-sectional area of the second conductor wire 141 is denoted as S4. Therefore, when the 127-bobbin frame stranding machine is used, the cross-sectional area of the second conductor wire 141 is: $S 4 = \left(S2-S1\right) / 36 .$

In a second implementation, when the second conductor layer 140 consists of two layers, the cross-sectional area of the second conductor wire 141 in the second conductor layer 140 is: a cross-sectional area of the second conductor layer 140 / (a number of bobbins in an outermost layer of the frame stranding machine 200 + a number of bobbins in a penultimate layer of the frame stranding machine 200).

The second conductor layer 140 has two layers, and the second conductor layer 140 may be stranded by using the number of bobbins in the outermost layer and the number of bobbins in the penultimate layer of the frame stranding machine 200. For example, in the 127-bobbin frame stranding machine, the number of bobbins in the outermost layer is 36, and the number of bobbins in the penultimate layer is 30.

First, the cross-sectional area S3 of the second conductor layer 140 is calculated. The calculation method of the cross-sectional area of the second conductor layer 140 is the same as that in the first implementation, which will not be repeated herein.

After the cross-sectional area S3 of the second conductor layer 140 is calculated, the cross-sectional area of the second conductor wire 141 in the second conductor layer 140 can be obtained by dividing the cross-sectional area S3 of the second conductor layer 140 by the number of bobbins of the frame stranding machine 200. Since the second conductor layer 140 has two layers, stranding needs to be performed by using the 30th and the 36th bobbins of the frame stranding machine. Therefore, the number of the second conductor wires 141 in the secondary stranding is the sum of the number of bobbins in the outermost layer of the frame stranding machine 200 and the number of bobbins in the penultimate layer of the frame stranding machine 200.

Therefore, when the 127-bobbin frame stranding machine is used, the cross-sectional area of the second conductor wire 141 is: $S 4 = \left(S2-S1\right) / \left(36+30\right) .$

It should be noted that stranding directions of two adjacent second conductor layers 140 are opposite. The stranding direction of the second conductor layer 140 closest to the optical fiber conducting layer 130 is opposite to the stranding direction of the optical fiber conducting layer 130.

In a third implementation, when the second conductor layer 140 consists of three layers, the cross-sectional area of the second conductor wire 141 in the second conductor layer 140 is: a cross-sectional area of the second conductor layer 140 / (a number of bobbins in an outermost layer of the frame stranding machine 200 + a number of bobbins in a penultimate layer of the frame stranding machine 200 + a number of bobbins in an antepenult layer of the frame stranding machine 200).

The second conductor layer 140 has three layers, and the second conductor layer 140 may be stranded by using the number of bobbins in the outermost layer, the number of bobbins in the penultimate layer and the number of bobbins in the antepenult layer of the frame stranding machine 200. For example, in the 127-bobbin frame stranding machine, the number of bobbins in the outermost layer is 36, the number of bobbins in the penultimate layer is 30, and the number of bobbins in the antepenult layer is 24.

First, the cross-sectional area S3 of the second conductor layer 140 is calculated. The calculation method of the cross-sectional area of the second conductor layer 140 is the same as that in the first implementation, which will not be repeated herein.

After the cross-sectional area S3 of the second conductor layer 140 is calculated, the cross-sectional area of the second conductor wire 141 in the second conductor layer 140 can be obtained by dividing the cross-sectional area S3 of the second conductor layer 140 by the number of bobbins of the frame stranding machine 200. Since the second conductor layer 140 has three layers, stranding needs to be performed by using the 24th, the 30th and the 36th bobbins of the frame stranding machine. Therefore, the number of the second conductor wires 141 in the secondary stranding is the sum of the number of bobbins in the outermost layer of the frame stranding machine 200, the number of bobbins in the penultimate layer of the frame stranding machine 200, and the number of bobbins in the antepenult layer of the frame stranding machine 200.

Therefore, when the 127-bobbin frame stranding machine is used, the cross-sectional area of the second conductor wire 141 is: $S 4 = \left(S2-S1\right) / \left(36+30+24\right) .$

It should be noted that among the three second conductor layers 140, stranding directions of two adjacent second conductor layers 140 are opposite. The stranding direction of the second conductor layer 140 closest to the optical fiber conducting layer 130 is opposite to the stranding direction of the optical fiber conducting layer 130.

Therefore, the number of bobbins at the corresponding layers of the frame stranding machine 200 used for stranding can be selected according to the specific number of layers of the second conductor layer 140, so that the use process of the frame stranding machine 200 is more flexible.

It should be noted that the frame stranding machine 200 further includes a glue injection device, which is configured to inject water-blocking glue between the central wire 110 and the first conductor wires 121, between the first conductor wires 121, and between the first conductor wires 121 and the optical fiber conducting layer 130 during the primary stranding, so as to improve water blocking performance of the semi-finished submarine cable 100a.

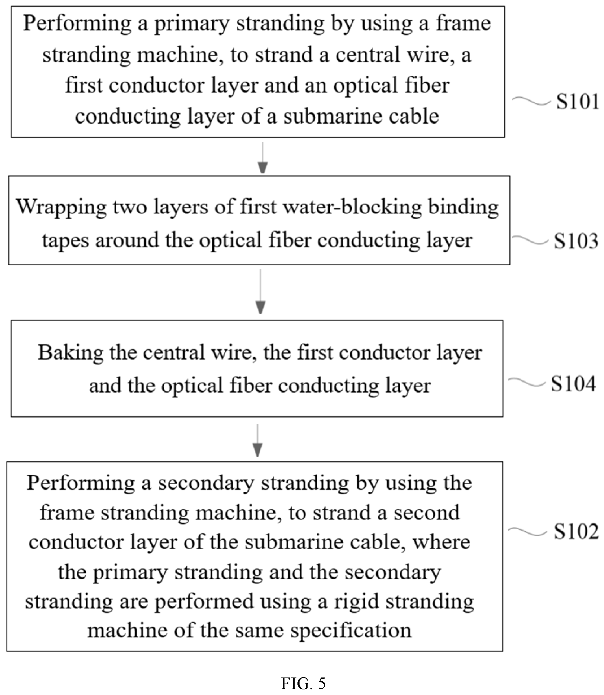

FIG. 5 is a second flowchart of a submarine cable manufacturing method according to an embodiment of the present application.

Referring to FIG. 5, after performing the primary stranding by using the frame stranding machine 200 to strand the central wire 110, the first conductor layer 120 and the optical fiber conducting layer 130 of the submarine cable 100, the method includes:
S103: wrapping two layers of first water-blocking binding tapes 150 around the optical fiber conducting layer 130.

Specifically, after the primary stranding, two layers of first water-blocking binding tapes 150 may be further wrapped around the optical fiber conducting layer 130 by a first binding tape wrapping device 700 (shown in FIG. 3), so as to further improve the water blocking performance of the semi-finished submarine cable 100a. In addition, the first water-blocking binding tape 150 located at the outer layer can also play a protective role on the first water-blocking binding tape 150 located at the inner layer.

S104: heating the central wire 110, the first conductor layer 120 and the optical fiber conducting layer 130.

Specifically, the central wire 110, the first conductor layer 120 and the optical fiber conducting layer 130 wrapped with the first water-blocking binding tapes 150 are placed in a baking equipment for heating, which can accelerate solidification of the water-blocking glue inside the semi-finished submarine cable 100a and prevent abnormal conditions such as bulging during the secondary stranding. It should be noted that an outer side of the optical fiber 131 may be wrapped with a layer of heat insulation material, so as to avoid influence on the optical fiber 131 during heating.

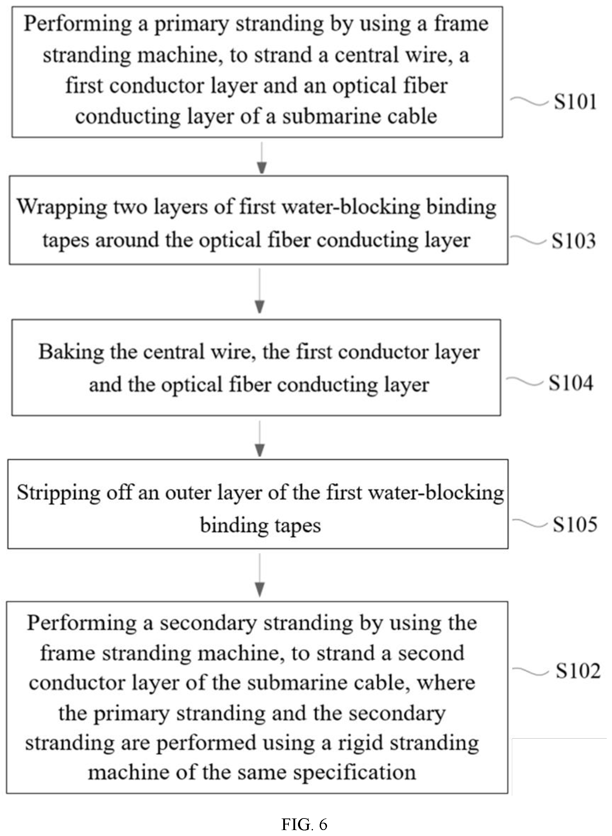

FIG. 6 is a third flowchart of the submarine cable manufacturing method according to an embodiment of the present application.

Referring to FIG. 6, before performing the secondary stranding by using the frame stranding machine 200 to strand the second conductor layer 140 of the submarine cable 100, the method includes: S105: stripping off an outer layer of the first water-blocking binding tapes 150.

Before the secondary stranding, the first water-blocking binding tape 150 located at the outer layer can be stripped off by a tape stripping machine 800, so as to avoid reduction of an effective conduction area in the submarine cable 100 caused by an excessively thick water blocking layer.

In addition, after the secondary stranding, two layers of second water-blocking binding tapes 160 may be further wrapped around the second conductor layer 140 by a second binding tape wrapping device 900 (shown in FIG. 4).

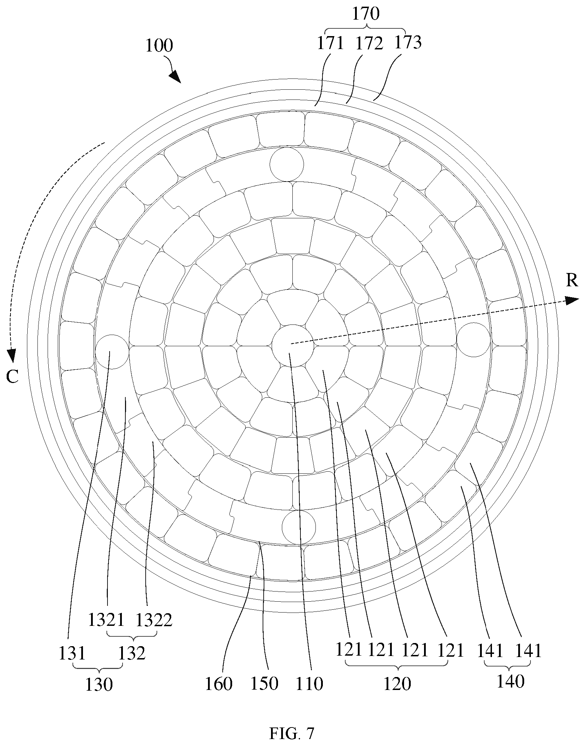

FIG. 7 is a first schematic structural diagram of a submarine cable according to an embodiment of the present application.

Referring to FIG. 7, the embodiment of the present application further provides a submarine cable 100, including a central wire 110, a first conductor layer 120, an optical fiber conducting layer 130, a first water-blocking binding tape 150, a second conductor layer 140, a second water-blocking binding tape 160 and a protective layer 170 sequentially arranged from inside to outside along a radial direction *R* of the submarine cable 100, where the first conductor layer 120 has a plurality of layers, each layer of the first conductor layer 120 includes a plurality of first conductor wires 121 sequentially arranged along a circumferential direction *C* of the submarine cable, the second conductor layer 140 has at least one layer, and each layer of the second conductor layer 140 includes a plurality of second conductor wires 141 sequentially arranged along the circumferential direction *C* of the submarine cable 100.

A cross-section of the submarine cable 100 is circular, and the submarine cable 100 includes the radial direction *R* and the circumferential direction *C*. The central wire 110 is an axis of the submarine cable 100, and a cross-section of the central wire 110 is also circular.

The first conductor layer 120 surrounds an outer side of the central wire 110, and a plurality of first conductor layers 120 may be provided. In the embodiment shown in FIG. 7, four first conductor layers 120 are provided. Each layer of the first conductor layer 120 includes a plurality of first conductor wires 121, and the first conductor wires 121 in each layer of the first conductor layer 120 are sequentially arranged along the circumferential direction. The central wire 110 and the first conductor wires 121 may be copper wires or aluminum wires, and the central wire 110 and the first conductor wires 121 are configured to transmit electrical signals.

The optical fiber conducting layer 130 is located outside the first conductor layer 120. The optical fiber conducting layer 130 includes a plurality of optical fibers 131, and the plurality of optical fibers 131 are arranged at uniform intervals along the circumferential direction *C*. The optical fibers 131 are configured to transmit optical signals.

The second conductor layer 140 is located outside the optical fiber conducting layer 130. One second conductor layer 140 may be provided, or two or more second conductor layers 140 may be provided. In the embodiment shown in FIG. 7, one second conductor layer 140 is provided. The second conductor layer 140 includes a plurality of second conductor wires 141, and the plurality of second conductor wires 141 are sequentially arranged along the circumferential direction. The second conductor wires 141 may be copper wires or aluminum wires, and the second conductor wires 141 are configured to transmit electrical signals. Compared with the related art where only the first conductor layer is provided, in the embodiment of the present application, by providing the first conductor layer 120 and the second conductor layer 140, the cross-sectional area of conductor wires for transmitting electrical signals in the submarine cable 100 can be increased, thereby improving the current-carrying capacity of the submarine cable 100.

Continuing to refer to FIG. 7, the first water-blocking binding tape 150 is disposed between the second conductor layer 140 and the optical fiber conducting layer 130, and the second water-blocking binding tape 160 is further disposed outside the second conductor layer 140. That is, the submarine cable 100 has two layers of waterproof measures. When the water blocking performance of the second water-blocking binding tape 160 decreases, only the transmission performance of the second conductor layer 140 is affected, while the first conductor layer 120 and the optical fiber conducting layer 130 can still work normally. Therefore, the use reliability of the submarine cable 100 can be improved.

Continuing to refer to FIG. 7, the protective layer 170 is disposed on the outermost side of the submarine cable 100, and the protective layer 170 may have a plurality of layers. For example, FIG. 7 schematically shows that the protective layer 170 includes a PE filling layer 171, a PP inner cushion layer 172 and an armored steel wire layer 173. The PE (Polyethylene) filling layer refers to a filling layer made of polyethylene, and the PP (Polypropylene) inner cushion layer refers to an inner cushion layer made of polypropylene. The protective layer 170 is configured to protect each layer in the submarine cable 100.

The optical fibers 131 in the submarine cable 100 are relatively fragile, and the protective layer 170 protects the optical fibers 131, which can well protect the optical fibers 131 during transportation and laying of the submarine cable 100. However, when the submarine cable 100 encounters anchor damage, the optical fibers 131 may still be damaged. In the embodiment of the present application, by disposing the second conductor layer 140 outside the optical fiber conducting layer 130, the second conductor layer 140 can protect the optical fiber conducting layer 130 while transmitting electrical signals, further improving the use reliability of the submarine cable 100. Anchor damage refers to that the submarine cable is dragged or impacted by anchors or towing cables of ships or other structures, resulting in excessive bending of the submarine cable, which causes fracture or other damages to the submarine cable.

According to the submarine cable 100 provided by the embodiment of the present application, by providing the central wire 110, the first conductor layer 120, the optical fiber conducting layer 130, the first water-blocking binding tape 150, the second conductor layer 140, the second water-blocking binding tape 160 and the protective layer 170, where the first conductor layer 120 has a plurality of layers, each layer of the first conductor layer 120 includes a plurality of first conductor wires 121 sequentially arranged along the circumferential direction *C* of the submarine cable, the second conductor layer 140 has at least one layer, and each layer of the second conductor layer 140 includes a plurality of second conductor wires 141 sequentially arranged along the circumferential direction *C* of the submarine cable 100. Compared with the related art where only the first conductor layer is provided, in the embodiment of the present application, by providing the first conductor layer 120 and the second conductor layer 140, the cross-sectional area of conductor wires for transmitting electrical signals in the submarine cable 100 can be increased, thereby improving the current-carrying capacity of the submarine cable 100. The submarine cable 100 has two layers of waterproof measures, i.e., the first water-blocking binding tape 150 and the second water-blocking binding tape 160, which can improve the use reliability of the submarine cable 100. The second conductor layer 140 is disposed outside the optical fiber conducting layer 130, and the second conductor layer 140 can protect the optical fiber conducting layer 130 while transmitting electrical signals, further improving the use reliability of the submarine cable 100.

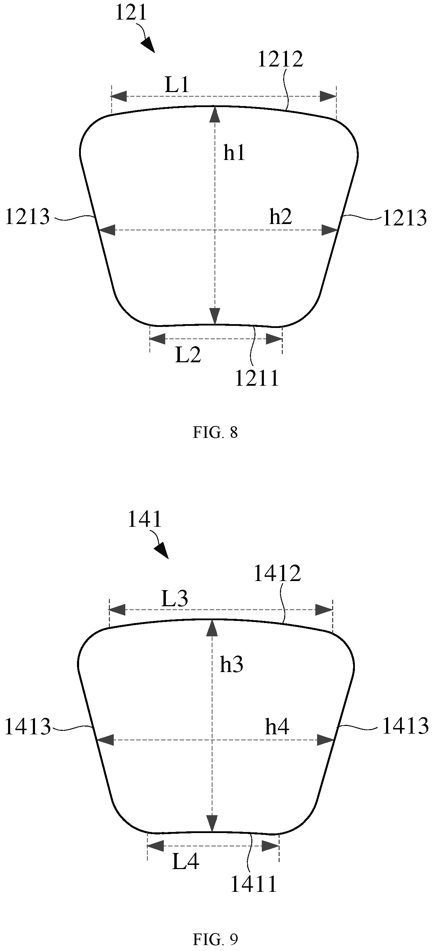

FIG. 8 is a first schematic structural diagram of a first conductor wire in a submarine cable according to an embodiment of the present application.

Referring to FIG. 8, the first conductor wire 121 is trapezoidal. A first short side 1211 of the first conductor wire 121 faces toward the central wire 110, a first long side 1212 of the first conductor wire 121 faces away from the central wire 110, and first inclined sides 1213 of adjacent first conductor wires 121 abut against each other; a distance between the first long side 1212 and the first short side 1211 is smaller than a distance between the two first inclined sides 1213.

The diameter of each layer of the submarine cable 100 gradually increases from inside to outside. The first conductor wire 121 is arranged in a trapezoidal shape, with the first short side 1211 facing toward the central wire and the first long side 1212 facing away from the central wire 110, so that the structure of the first conductor wire 121 can be better adapted to the gradually increasing diameter of the submarine cable 100 from inside to outside. In addition, the first inclined sides 1213 of adjacent first conductor wires 121 abut against each other. Compared with the related art where the first conductor wires 121 are circular, the area of vacant regions in the submarine cable 100 can be reduced, thereby increasing the area of the first conductive layer 120 in the submarine cable 100.

Continuing to refer to FIG. 8, a size of the first long side 1212 is L1, a length of the first short side 1211 is L2, a distance between the first long side 1212 and the first short side 1211 is h1, and a distance between midpoints of the two first inclined sides 1213 is h2. Setting h1 to be smaller than h2 means that the first conductor wire 121 is a flattened trapezoid. Arranging the first conductor wire 121 in a flattened trapezoidal shape can avoid problems of loose strands or deteriorated water blocking performance caused by overturning of the first conductor wire 121. In some implementations, the flattened trapezoidal shape of the first conductor wire 121 can be controlled by the formula L1 - L2 ≥ h1/2.

FIG. 9 is a first schematic structural diagram of a second conductor wire in a submarine cable according to an embodiment of the present application.

Referring to FIG. 7 and FIG. 9, the second conductor wire 141 is trapezoidal. A second short side 1411 of the second conductor wire 141 faces toward the central wire 110, a second long side 1412 of the second conductor wire 141 faces away from the central wire 110, and second inclined sides 1413 of adjacent second conductor wires 141 abut against each other; a distance between the second long side 1412 and the second short side 1411 is smaller than a distance between the two second inclined sides 1413.

The second conductor wire 141 may also be arranged in a trapezoidal shape, with the second short side 1411 facing toward the central wire and the second long side 1412 facing away from the central wire 110, so that the structure of the second conductor wire 141 can be better adapted to the gradually increasing diameter of the submarine cable 100 from inside to outside. In addition, the second inclined sides 1413 of adjacent second conductor wires 141 abut against each other. With such arrangement, the area of vacant regions in the submarine cable 100 can be reduced, thereby increasing the area of the second conductor layer 140 in the submarine cable 100.

Continuing to refer to FIG. 9, a size of the second long side 1412 is L3, a length of the second short side 1411 is L4, a distance between the second long side 1412 and the second short side 1411 is h3, and a distance between midpoints of the two second inclined sides 1413 is h4. Setting h3 to be smaller than h4 means that the second conductor wire 141 is a flattened trapezoid. Arranging the second conductor wire 141 in a flattened trapezoidal shape can avoid problems of loose strands or deteriorated water blocking performance caused by overturning of the second conductor wire 141. In some implementations, the flattened trapezoidal shape of the second conductor wire 141 can be controlled by the formula L3 - L4 ≥ h3/2.

It should be noted that, continuing to refer to FIG. 8 and FIG. 9, four corners of each of the first conductor wire 121 and the second conductor wire 141 are provided with chamfers, and a size of each chamfer may be 80° to 100°.

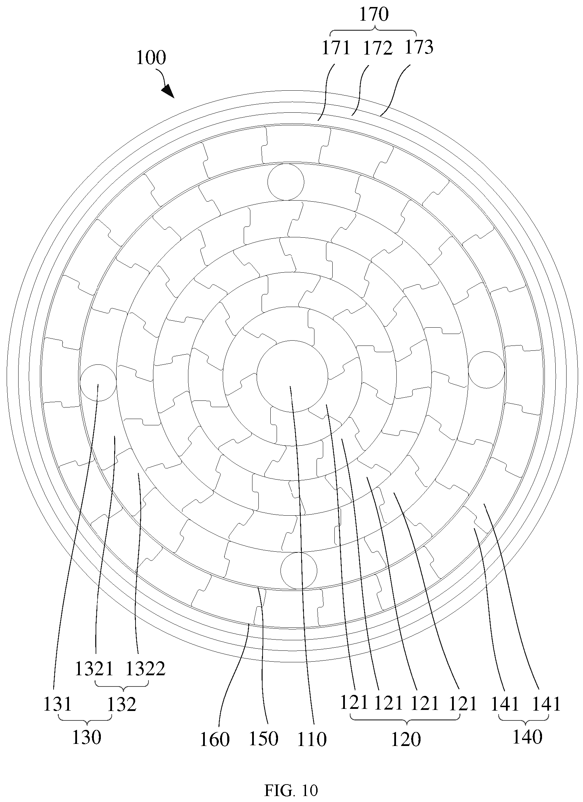

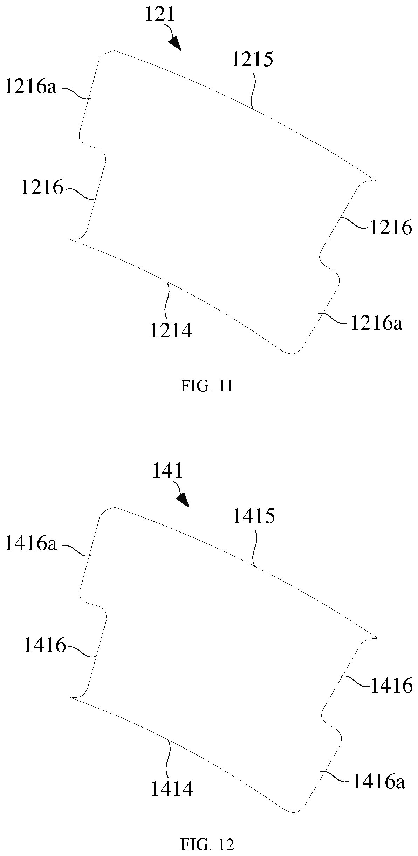

FIG. 10 is a second schematic structural diagram of a submarine cable according to an embodiment of the present application; FIG. 11 is a second schematic structural diagram of a first conductor wire in a submarine cable according to an embodiment of the present application.

Referring to FIG. 10 and FIG. 11, the first conductor wire 121 is in a annular-sector shape. The first conductor wire 121 includes a first inner arc 1214 and a first outer arc 1215, the first inner arc 1214 faces toward the central wire, and the first outer arc 1215 faces away from the central wire; two first side edges 1216 of the first conductor wire 121 are provided with first tooth portions 1216a, and the first tooth portions 1216a on the first side edges 1216 of two adjacent first conductor wires 121 mesh with each other.

Compared with the trapezoidal shape, the annular-sector shape is better adapted to the gradually increasing diameter of the submarine cable 100 from inside to outside, so that the area of vacant regions in the submarine cable 100 can be reduced, thereby increasing the area of the first conductive layer 120 in the submarine cable 100.

The first side edge 1216 is provided with the first tooth portion 1216a. In the embodiments shown in FIG. 10 and FIG. 11, one first tooth portion 1216a is shown. The first tooth portions 1216a on the first side edges 1216 of two adjacent first conductor wires 121 mesh with each other to prevent the first conductor wires 121 from overturning.

FIG. 12 is a second schematic structural diagram of a second conductor wire in a submarine cable according to an embodiment of the present application.

Referring to FIG. 10 and FIG. 12, the second conductor wire 141 is in a annular-sector shape. The second conductor wire 141 includes a second inner arc 1414 and a second outer arc 1415, the second inner arc 1414 faces toward the central wire, and the second outer arc 1415 faces away from the central wire; second side edges 1416 of the second conductor wire 141 are provided with second tooth portions 1416a, and the second tooth portions 1416a on the second side edges 1416 of two adjacent second conductor wires 141 mesh with each other.

Compared with the trapezoidal shape, the annular-sector shape is better adapted to the gradually increasing diameter of the submarine cable 100 from inside to outside, so that the area of vacant regions in the submarine cable 100 can be reduced, thereby increasing the area of the first conductive layer 120 in the submarine cable 100.

The second side edge 1416 is provided with the second tooth portion 1416a. In the embodiments shown in FIG. 10 and FIG. 12, one second tooth portion 1416a is shown. The second tooth portions 1416a on the second side edges 1416 of two adjacent second conductor wires 141 mesh with each other to prevent the second conductor wires 141 from overturning.

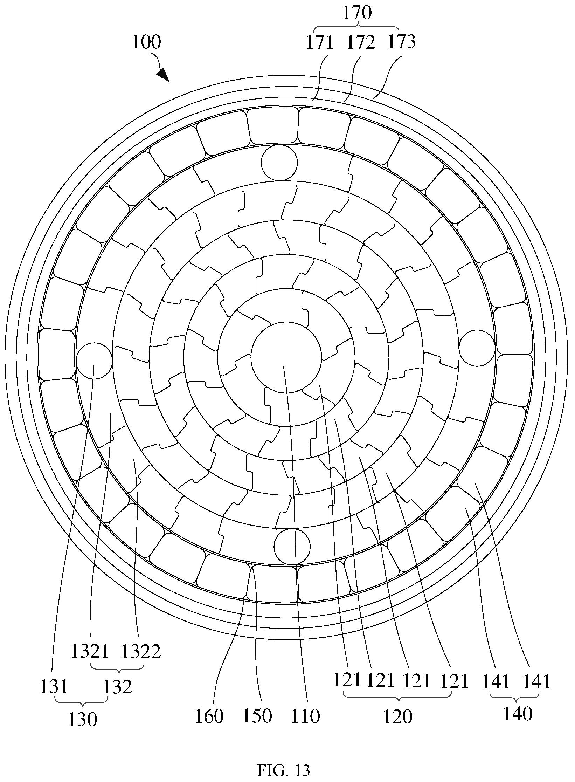

FIG. 13 is a third schematic structural diagram of a submarine cable according to an embodiment of the present application.

Referring to FIG. 13, the first conductor wire 121 is in a annular-sector shape with first tooth portions 1216a, and the second conductor wire 141 is trapezoidal.

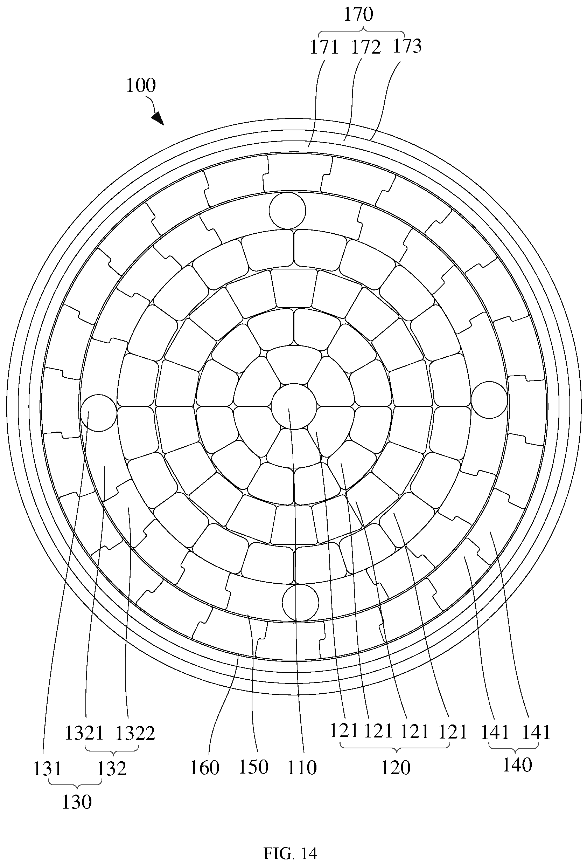

FIG. 14 is a fourth schematic structural diagram of a submarine cable according to an embodiment of the present application.

Referring to FIG. 14, the second conductor wire 141 is in a annular-sector shape with second tooth portions 1416a, and the first conductor wire 121 is trapezoidal. That is, shapes of the first conductor wire 121 and the second conductor wire 141 may be the same or different. This is because the first conductor layer 120 and the second conductor layer 140 are manufactured by two times of stranding, and shapes of conductor wires in the two times of stranding may be different, so that conductor wires of different shapes can be selected according to actual requirements.

Hereinafter, a specific structure of the optical fiber conducting layer 130 is described.

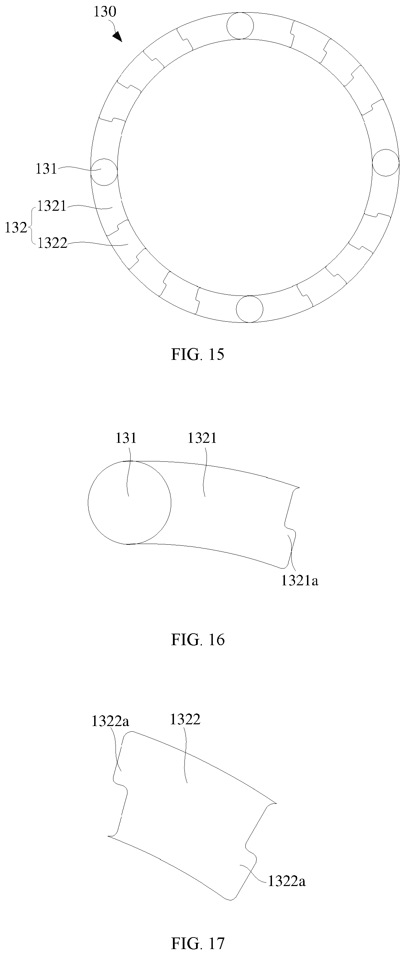

FIG. 15 is a schematic structural diagram of an optical fiber filling layer in a submarine cable according to an embodiment of the present application; FIG. 16 is a schematic structural diagram of a first filling segment in a submarine cable according to an embodiment of the present application; FIG. 17 is a schematic structural diagram of a second filling segment in a submarine cable according to an embodiment of the present application. The optical fiber 131 is also shown in FIG. 16, so as to clearly show the fit between the optical fiber 131 and the first filling segment 1321.

Continuing to refer to FIG. 15 to FIG. 17, the optical fiber conducting layer 130 further includes a plurality of filling segments 132, and the plurality of optical fibers 131 and the plurality of filling segments 132 are arranged at intervals along the circumferential direction *C* of the submarine cable 100; the filling segments 132 include first filling segments 1321 and second filling segments 1322, each optical fiber 131 is flanked by the first filling segments 1321, and a side of the first filling segment 1321 facing toward the optical fiber 131 fits closely with an outer wall of the optical fiber 131; the plurality of second filling segments 1322 are sequentially arranged along the circumferential direction *C* on a side of the first filling segment 1321 facing away from the optical fiber 131, the side of the first filling segment 1321 facing away from the optical fiber 131 is provided with a third tooth portion 1321a, and both sides of each second filling segment 1322 are provided with fourth tooth portions 1322a; the third tooth portion 1321a meshes with the fourth tooth portion 1322a adjacent to the third tooth portion 1321a, and adjacent fourth tooth portions 1322a mesh with each other.

Both the first filling segment 1321 and the second filling segment 1322 are preformed filling segments. The first filling segment 1321, the second filling segment 1322 and the optical fiber 131 are stranded together to form the optical fiber conducting layer 130.

The filling segments 132 on both sides of the optical fiber 131 are the first filling segments 1321, and the side of the first filling segment 1321 facing toward the optical fiber 131 fits closely with the outer wall of the optical fiber 131, so as to better protect the optical fiber 131.

The third tooth portion 1321a meshes with the fourth tooth portion 1322a adjacent to the third tooth portion 1321a, so that a good bonding force is provided between the first filling segment 1321 and the second filling segment 1322. The adjacent fourth tooth portions 1322a enable a good bonding force between adjacent second filling segments 1322.

In some embodiments, the first water-blocking binding tape 150 is wrapped in a butt wrapping manner; the second water-blocking binding tape 160 is wrapped in a lap wrapping manner.

The second conductor layer 140 is further disposed outside the first water-blocking binding tape 150. The first water-blocking binding tape 150 adopts the butt wrapping manner, which can prevent the first water-blocking binding tape 150 from having protrusions, thereby preventing the second conductor wires 141 in the second conductor layer 140 from protruding along the circumferential direction *C*.

No conductor layer is disposed outside the second water-blocking binding tape 160. Therefore, the second water-blocking binding tape 160 is wrapped in the lap wrapping manner, so that the submarine cable 100 can have good water blocking performance. The overlap rate of the lap wrapping may be 25% to 30%.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions described in the foregoing embodiments, or make equivalent replacements to some or all of the technical features thereof. These modifications or replacements do not make the essence of the corresponding technical solutions depart from the scope of the technical solutions of the embodiments of the present application.

## Claims

1. A submarine cable manufacturing method, comprising:
performing a primary stranding by using a frame stranding machine, to strand a central wire, a first conductor layer and an optical fiber conducting layer of a submarine cable;
performing a secondary stranding by using the frame stranding machine, to strand a second conductor layer of the submarine cable, wherein the primary stranding and the secondary stranding are performed using a rigid stranding machine of the same specification.

2. The submarine cable manufacturing method according to claim 1, wherein the performing the secondary stranding by using the frame stranding machine to strand the second conductor layer of the submarine cable comprises: when the second conductor layer is a single layer, a cross-sectional area of a second conductor wire in the second conductor layer is: a cross-sectional area of the second conductor layer / a number of bobbins in an outermost layer of the frame stranding machine.

3. The submarine cable manufacturing method according to claim 1, wherein the performing the secondary stranding by using the frame stranding machine to strand the second conductor layer of the submarine cable comprises: when the second conductor layer consists of two layers, a cross-sectional area of a second conductor wire in the second conductor layer is: a cross-sectional area of the second conductor layer / (a number of bobbins in an outermost layer of the frame stranding machine + a number of bobbins in a penultimate layer of the frame stranding machine).

4. The submarine cable manufacturing method according to claim 1, wherein the performing the secondary stranding by using the frame stranding machine to strand the second conductor layer of the submarine cable comprises: when the second conductor layer consists of three layers, a cross-sectional area of a second conductor wire in the second conductor layer is: a cross-sectional area of the second conductor layer / (a number of bobbins in an outermost layer of the frame stranding machine + a number of bobbins in a penultimate layer of the frame stranding machine + a number of bobbins in an antepenult layer of the frame stranding machine).

5. The submarine cable manufacturing method according to any one of claims 1 to 4, wherein after the performing the primary stranding by using the frame stranding machine, to strand the central wire, the first conductor layer and the optical fiber conducting layer of the submarine cable, the method comprises:
wrapping two layers of first water-blocking binding tapes around the optical fiber conducting layer; and
heating the central wire, the first conductor layer and the optical fiber conducting layer.

6. The submarine cable manufacturing method according to claim 5, wherein before the performing the secondary stranding by using the frame stranding machine to strand the second conductor layer of the submarine cable, the method comprises:
stripping off an outer layer of the first water-blocking binding tapes.

7. A submarine cable, comprising a central wire, a first conductor layer, an optical fiber conducting layer, a first water-blocking binding tape, a second conductor layer, a second water-blocking binding tape and a protective layer sequentially arranged from inside to outside along a radial direction of the submarine cable, wherein the first conductor layer has a plurality of layers, each layer of the first conductor layer comprises a plurality of first conductor wires sequentially arranged along a circumferential direction of the submarine cable, the second conductor layer has at least one layer, and each layer of the second conductor layer comprises a plurality of second conductor wires sequentially arranged along the circumferential direction of the submarine cable.

8. The submarine cable according to claim 7, wherein the first conductor wire is trapezoidal, a first short side of the first conductor wire faces toward the central wire, a first long side of the first conductor wire faces away from the central wire, and first inclined sides of adjacent first conductor wires abut against each other;
a distance between the first long side and the first short side is smaller than a distance between the two first inclined sides.

9. The submarine cable according to claim 7, wherein the second conductor wire is trapezoidal, a second short side of the second conductor wire faces toward the central wire, a second long side of the second conductor wire faces away from the central wire, and second inclined sides of adjacent second conductor wires abut against each other;
a distance between the second long side and the second short side is smaller than a distance between the two second inclined sides.

10. The submarine cable according to claim 7, wherein the first conductor wire is in an annular-sector shape, the first conductor wire comprises a first inner arc and a first outer arc, the first inner arc faces toward the central wire, and the first outer arc faces away from the central wire;
two first side edges of the first conductor wire are provided with first tooth portions, and the first tooth portions on the first side edges of two adjacent first conductor wires mesh with each other.

11. The submarine cable according to claim 7, wherein the second conductor wire is in a annular-sector shape, the second conductor wire comprises a second inner arc and a second outer arc, the second inner arc faces toward the central wire, and the second outer arc faces away from the central wire;
second side edges of the second conductor wire are provided with second tooth portions, and the second tooth portions on the second side edges of two adjacent second conductor wires mesh with each other.

12. The submarine cable according to any one of claims 7 to 11, wherein the optical fiber conducting layer comprises a plurality of filling segments and a plurality of optical fibers, and the plurality of optical fibers and the plurality of filling segments are arranged at intervals along the circumferential direction of the submarine cable;
the filling segments comprise first filling segments and second filling segments, each optical fiber is flanked by the first filling segments, and a side of each first filling segment facing toward the optical fiber fits closely with an outer wall of the optical fiber;
the plurality of second filling segments are sequentially arranged along the circumferential direction on a side of the first filling segment facing away from the optical fiber, the side of the first filling segment facing away from the optical fiber is provided with a third tooth portion, and both sides of each second filling segment are provided with fourth tooth portions; the third tooth portion meshes with the fourth tooth portion adjacent to the third tooth portion, and adjacent fourth tooth portions mesh with each other.

13. The submarine cable according to any one of claims 7 to 11, wherein the first water-blocking binding tape is wrapped in a butt wrapping manner; and the second water-blocking binding tape is wrapped in a lap wrapping manner.
